# EUROPÄISCHE PATENTSCHRIFT

(11) **EP 0 546 290 B1**
(45) Veröffentlichungstag und Bekanntmachung des Hinweises auf die Patenterteilung: **11.09.1996**
(21) Anmeldenummer: 92118135.0
(22) Anmeldetag: 23.10.1992
(51) Int. Cl.: B60Q 1/26

(54) **Warnleuchte für Fahrzeuge**
Warning light for vehicle
Feu avertisseur pour véhicule

(30) Priorität: 11.12.1991 DE 4140821
(43) Veröffentlichungstag der Anmeldung: 16.06.1993
(73) Patentinhaber: Hella KG Hueck & Co., 59552 Lippstadt (DE)
(72) Erfinder: Schreckenberg, Franz-Josef, W-4799 Borchen (DE); Füchtjohann, Herbert, W-4795 Delbrück (DE); Mörchen, Kurt, W-4790 Paderborn (DE); Schmidt, Burkhard, W-5787 Olsberg (DE)

(56) Entgegenhaltungen:
- DE-A- 3 331 754
- FR-A- 1 185 191
- FR-A- 2 230 028

## Beschreibung

Die Erfindung betrifft eine Warnleuchte für Fahrzeuge gemäß dem Oberbegriff des Anspruchs 1.

Eine derartige Warnleuchte ist aus der DE-A-23 24 260 vorbekannt und wird z. B. auf wegebevorrechtigten Fahrzeugen, wie Polizei - und Feuerwehreinsatzfahrzeugen, zur optischen Signalgebung verwendet. Zwar weist diese vorbekannte Warnleuchte als Antrieb einen kollektorlosen und getriebelosen Motor auf, dessen Stator die Motorwicklungen trägt. Der Rotor des Motors ist jedoch innerhalb des Stators angeordnet, so daß das Drehmoment des dortigen kollektorlosen Motors vergleichsweise gering ist. Dies kann aufgrund der geringen Drehzahl des kollektorlosen Motors zu einer ungleichmäßigen Drehung der Rotors und damit auch des Reflektors und damit zu einem Ruckeln des Reflektors führen, das für den Betrachter der Warnleuchte merklich und störend ist.

Zudem ist bei dieser vorbekannten Warnleuchte die Verwendung eines handelsüblichen Synchronmotors vorgesehen, dessen konstruktive Merkmale bei der übrigen Konstruktion der Warnleuchte zu berücksichtigen sind. Dies kann zu einem unnötig hohen Konstruktions- und Kostenaufwand bei der Herstellung der vorbekannten Warnleuchte führen.

Aus der DE-A-33 31 754 ist zwar ein kollektorloser Gleichstrommotor vorbekannt, der einen topfförmigen Außenläufer-Rotor mit einer Dauermagnetanordnung aufweist. Dieser kollektorlose Gleichstrommotor ist jedoch nicht zur Verwendung als Antrieb in Warnleuchten, sondern als Antrieb eines Kompaktventilators vorgesehen.

Dieser Motortyp weist eine große Massenträgheit auf, da die bewegte Masse des Rotors einen, im Vergleich zu dem Motortyp gemäß DE-A-2 324 260, großen Abstand von der Drehachse aufweist.

Die Erfindung hat die Aufgabe, eine Warnleuchte für Fahrzeuge zu schaffen, die bei einfacher und kostengünstiger Konstruktion gegenüber dem Vorbekannten einen besseren Gleichlauf aufweist.

Diese Aufgabe wird erfindungsgemäß durch die Kennzeichenmerkmale des Anspruchs 1 gelöst.

Um bei den üblicherweise gewünschten niedrigen Drehzahlen des drehbaren Reflektors und damit des kollektorlosen und getriebelosen Antriebsmotors eine möglichst gleichmäßige Drehbewegung des Reflektors ohne Ruckeln zu erzielen, ist erfindungsgemäß vorgesehen, daß der Rotor des Motors außerhalb vom Stator angeordnet ist. Aufgrund der großen Massenträgheit weist der kollektorlose Motor eine gleichmäßige Drehung auch bei niedrigen Drehzahlen auf.

Erfindungsgemäß werden die Motorwicklungen auf einem Kragen einer Grundplatte angeordnet. Die Motorwicklungen können direkt auf dem Kragen gewickelt werden. Durch die einstückige Ausbildung des Kragens mit der Grundplatte wird die erfindungsgemäße Konstruktion weiter vereinfacht und verbilligt.

Durch die elektronische Ansteuerung des kollektorlosen Gleichstrommotors ist zudem eine Synchronisierung mehrerer erfindungsgemäßer Warnleuchten mit kollektorlosen Antriebsmotoren möglich. Darüberhinaus kann auch die Drehung des Reflektors und die Abbremsung des Reflektors beim Abschalten der erfindungsgemäßen Warnleuchte elektronisch mit einfachen Mitteln überwacht werden.

Vorteilhafte Ausgestaltungen und Weiterbildungen der erfindungsgemäßen Warnleuchte ergeben sich aus den Unteransprüchen.

Es ist besonders vorteilhaft, wenn der Stator mit dem Leuchtensockel drehfest verbunden ist, so daß die drehende Anordnung, bestehend aus dem drehbaren Reflektor und dem Rotor, bis auf die Drehbewegung möglichst sicher in dem Gehäuse, bestehend aus der lichtdurchlässigen Abdeckhaube und dem Leuchtensockel, fixiert ist. Um jedoch die Übertragung von Vibrationen zwischen dem Stator und dem Leuchtensockel zu verhindern, kann in diesem Zusammenhang vorteilhaft der Stator mit dem Leuchtensockel schwingungsgedämpft, insbesondere mittels Gummipuffern, verbunden sein.

Andererseits kann in diesem Zusammenhang zur weiteren Verringerung des Konstruktionsaufwandes und zur weiteren Verringerung der Bauhöhe der erfindungsgemäßen Warnleuchte die Grundplatte einstückig mit dem Leuchtensockel ausgebildet und aus Kunststoff gespritzt sein. Dies ist bei der erfindungsgemäßen Warnleuchte anders als beim Vorbekannten möglich, da der Antrieb und der sich drehende Reflektor bei der erfindungsgemäßen Warnleuchte kaum Vibrationen erzeugen.

In diesem Zusammenhang kann die Grundplatte eine Leiterplatte mit den elektronischen Bauteilen zur elektronischen Kommutierung des kollektorlosen Motors tragen. Es ergibt sich dann eine vorteilhafte, bauliche Zusammenfassung der Motorwicklungen mit der Leiterplatte, die nur kurze Verbindungsleitungen zwischen diesen beiden Teilen erforderlich macht und elektrische Verluste vermeidet.

Der Rotor kann dann vorteilhaft die Permanentmagnete aufweisen, wobei dann aufgrund des vorgeschlagenen Direktantriebes auch der Reflektor mit dem Rotor drehfest verbunden werden kann. Beim Vorbekannten ist die Glühlampe ortsfest ausgebildet. Es gibt auch Warnleuchten, bei denen die Glühlampe sich mit dem Reflektor mitdreht. In diesen Fällen ist es in diesem Zusammenhang besonders vorteilhaft, wenn die Glühlampe mit dem Rotor ebenso wie der Reflektor drehfest verbunden ist.

Um eine leichtgängige Drehung des Reflektors zu ermöglichen, ist es besonders vorteilhaft, wenn der Rotor Lager aufweist, die auf einer drehfest mit der Grundplatte verbundenen Hülse drehbar angeordnet sind. Als Lager kommen hier sowohl Gleitlager als auch Nadel oder Kugellager in Frage. Um in diesem Zusammenhang die elektrische Verbindung zwischen der Glühlampe und elektrischen Anschlußteilen herzustellen, ist es besonders vorteilhaft, wenn die Hülse elektrisch leitfähig und einerseits mit der Glühlampe und andererseits mit den elektrischen Anschlußmitteln verbunden ist.

Ebenfalls zum elektrischen Anschluß der Glühlampe kann innerhalb der Hülse mittels eines Führungsteils isoliert ein elektrischer Leiter, insbesondere eine Schraube, angeordnet sein, die einerseits mit der Glühlampe und andererseits mit einem weiteren elektrischen Anschluß verbunden ist. Insbesondere bei Ausbildung des elektrischen Leiters als Schraube kann die Schraube gegebenenfalls gemeinsam mit anderen Teilen den Rotor und den Stator gegeneinander axial fixieren.

Eine derartige Fixierung ist auch dadurch möglich, daß der Rotor auf der Hülse mittels einer Scheibe axial fixiert ist. Insbesondere dann, wenn sich die Glühlampe mitdreht, ist es dann besonders vorteilhaft, wenn Schleifer zur elektrischen Verbindung von Hülse und Leiter mit der Glühlampe vorgesehen sind.

Ausführungsbeispiele der erfindungsgemäßen Warnleuchte sind in den Zeichnungen dargestellt und werden im folgenden anhand der Zeichnungen näher erläutert.

Es zeigen
Figur 1 eine erfindungsgemäße Warnleuchte, mit schwingungsentkoppelter Grundplatte teilweise geschnitten,
Figur 2 einen Blick von oben auf den Rotor und die Grundplatte der Warnleuchte gemäß Figur 1 und
Figur 3 eine erfindungsgemäße Warnleuchte mit einstückiger Ausbildung der Grundplatte gemeinsam mit dem Leuchtensockel und mit einem Rohranschlußteil zur Befestigung der erfindungsgemäßen Warnleuchte.

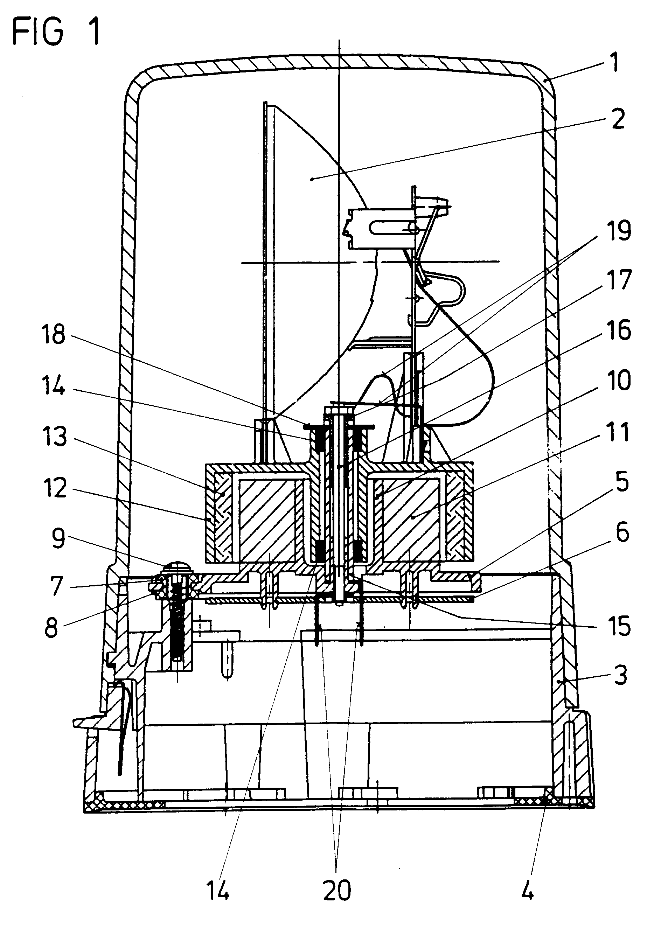

In der Figur 1 ist eine lichtdurchlässige Abdeckhaube (1) mittels einer lösbaren Bajonettverbindung mit einem Leuchtensockel (3) verbunden. Die gesamte erfindungsgemäße Warnleuchte gemäß der Figur 1 kann mit einer Gummiunterlegscheibe (4) auf einer Unterlage eines Fahrzeuges z. B. mit Schrauben befestigt werden.

Innerhalb der Abdeckhaube befindet sich ein drehbarer Reflektor (2), der auf einem Rotor (12) eines kollektorlosen Gleichstrommotors befestigt ist. Der Reflektor (2) weist eine Durchstecköffnung auf zur Aufnahme einer Glühlampe, die in den Figuren nicht dargestellt ist.

Ebenfalls innerhalb der lichtdurchlässigen Abdeckhaube (1) ist eine Grundplatte (5) angeordnet, die mittels Gummipuffern (7) und Schrauben (9) vibrationsgedämpft an dem Leuchtensockel (3) befestigt ist. Die Gummipuffer (7) sind dabei in Ösen (8) der Grundplatte (5) angeordnet.

Die Grundplatte (5) trägt an ihrer Unterseite eine Leiterplatte (6), die in der Figur 1 nicht dargestellte elektrische Bauteile zur elektronischen Kommutierung des kollektorlosen Gleichstrommotors trägt. Auf der von der Leiterplatte (6) abgewandten Seite weist die Grundplatte (5) einen Kragen (10) auf, auf dem die Motorwicklungen (11) des kollektorlosen Gleichstrommotors angeordnet sind. Die Motorwicklungen (11) können vorteilhaft direkt auf diesen Kragen (10) aufgewickelt sein.

Der Rotor (12) trägt an seinem Außenumfang Permanentmagnete (13), deren Magnetfelder abhängig von der Bestromung mit den Motorwicklungen (11) korrespondieren und zu einer Drehung des Rotors (12) gegenüber den Motorwicklungen (11), die den Stator des kollektorlosen Gleichstrommotors bilden, führen.

Um eine leichte Drehung des Rotors (12) gegenüber den Motorwicklungen (11) zu ermöglichen, weist der Rotor (12) Lager (14) auf, die auf einer elektrisch leitfähigen Hülse (15) drehbar angeordnet sind. Im Inneren der Hülse (15) ist mittels eines Führungsteils (17) isoliert geführt eine Sechskantschraube (16), die ebenfalls elektrisch leitfähig ist, angeordnet.

Weiterhin ist zwischen dem Führungsteil (17) und dem Rotor (12) zur axialen Fixierung des Rotors (12) gegenüber den Motorwicklungen (11) eine Scheibe (18) vorgesehen, die elektrisch leitend mit der Hülse (15) verbunden ist. Sowohl die Hülse (15) als auch die Sechskantschraube (16) sind an ihrem in der Figur (1) nach unten weisenden Ende mit Flachsteckern (20) versehen, die auch die elektrische Leiterplatte (6) durchragen und mit den auf dieser Leiterplatte (6) befindlichen Leiterbahnen elektrisch verbunden sein können.

Sowohl auf der Scheibe (18) als auch auf dem Sechskantkopf der Sechskantschraube (16) liegen Schleifer (19) auf, die mit den elektrischen Anschlüssen der Glühlampe verbunden sind, um ein Aufleuchten der Glühlampe zu ermöglichen.

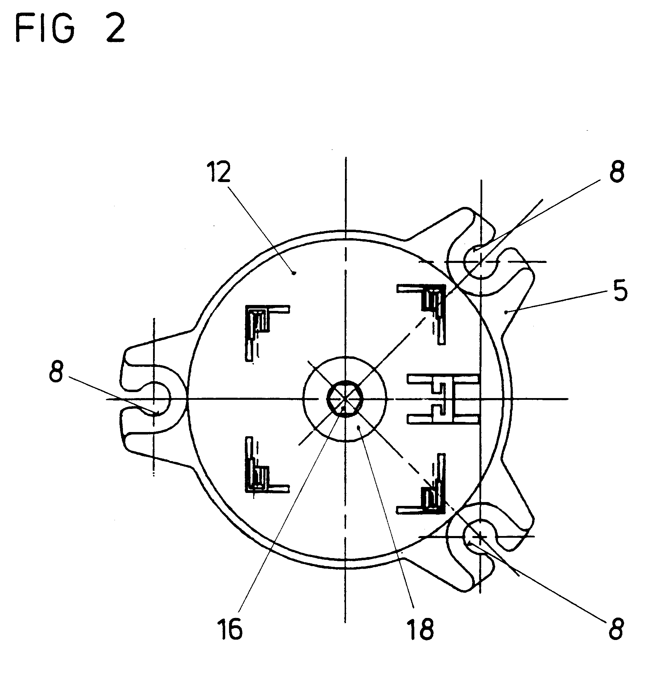

In der Figur 2 sind gleiche oder gleichwirkende Einrichtungsteile wie in der Figur 1 mit den gleichen Bezugszeichen versehen. Man erkennt hier insbesondere die Grundform der Grundplatte (5) mit insgesamt drei Ösen (8), in die die Gummipuffer (7) eingesetzt werden können. Zudem erkennt man, daß der Rotor (12) auf seiner Oberseite Befestigungsmittel zur Befestigung des Reflektors und der die Glühlampe tragenden Teile aufweist.

Die erfindungsgemäße Warnleuchte gemäß den Figuren 1 und 2 funktioniert nun folgendermaßen:

Sobald an den Flachsteckern (20) Spannung anliegt, so wird die in den Figuren nicht dargestellte Glühlampe eingeschaltet und erzeugt Licht. Mit dem Einschalten der Glühlampe wird jedoch auch die elektronische Schaltung, die sich auf der Leiterplatte (6) befindet, mit Strom versorgt, die daraufhin den Vorgang der elektronischen Kommutierung des kollektorlosen Gleichstrommotors in Gang setzt, in dem die Motorwicklungen (11) mit einer vorgegebenen Phasenlage bestromt werden. Sobald dies geschieht, wird zwischen den Permanentmagneten (13) und den Motorwicklungen (11) ein elektromagnetisches Feld aufgebaut, das zu einer Drehkraft führt, die zwischen dem Rotor (12) und den Motorwicklungen (11) wirkt. Aufgrund der frei drehbaren Lagerung des Rotors (12) auf der Hülse (15) mittels der Lager (14) wird der Rotor (12) durch diese Kraftwirkung in eine Drehbewegung gegenüber den Motorwicklungen (11) versetzt. Da sowohl die in den Figuren nicht dargestellte Glühlampe als auch der Reflektor (2) mit dem Rotor (12) drehfest verbunden sind, wird gemeinsam mit dem Rotor (12) auch der Reflektor (2) gedreht, was zu der bekannten Signalwirkung derartiger Warnleuchten führt. Diese Drehung des Reflektors (2) wird solange aufrechterhalten, wie an den Flachsteckern (20) Spannung anliegt. Sobald die Spannung an den Flachsteckern (20) nicht mehr anliegt, erlischt die Glühlampe und der Rotor (12) gemeinsam mit dem Reflektor (2) beendet seine Drehbewegung.

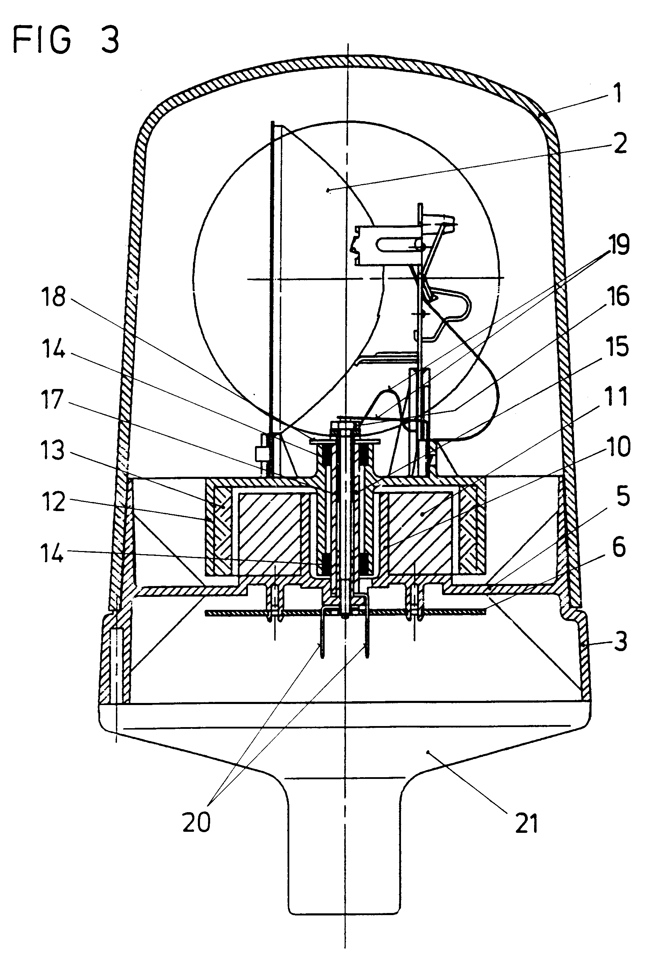

In der Figur 3 sind gleiche oder gleichwirkende Einrichtungsteile wie in den Figuren 1 und 2 mit den gleichen Bezugszeichen versehen. Im Unterschied zu der erfindungsgemäßen Warnleuchte gemäß der Figur 1 ist hier die Grundplatte (5) gemeinsam mit dem Leuchtensockel (3) einstückig aus Kunststoff gespritzt. Diese konstruktive Lösung ist bei der erfindungsgemäßen Warnleuchte deshalb möglich, weil die gesamte drehende Anordnung, bestehend aus dem Rotor (12), dem Permanentmagneten (13), den Lagern (14), dem Reflektor (2) und der Glühlampe, nahezu keine Vibrationen erzeugt, die auf die übrigen Teile der erfindungsgemäßen Warnleuchte übertragen werden könnten. Ist dies der Fall, so ergibt sich bei der Warnleuchte gemäß Figur 3 der besondere Vorteil, daß die Konstruktion gegenüber der Lösung gemäß Figur 1 konstruktiv einfacher ist. Es entfallen dann insbesondere die Ösen (8), die Gummipuffer (7) und die Schrauben (9), die insbesondere bei der Montage nennenswerten Aufwand verursachen können. Als weiterer Vorteil der erfindungsgemäßen Warnleuchte gemäß Figur 3 ergibt sich, daß die Warnleuchte, bestehend aus der Abdeckhaube (1) und dem Leuchtensockel (3), eine gegenüber der Lösung gemäß Figur 1 geringere Bauhöhe aufweisen kann.

Da der erfindungsgemäß verwendete kollektorlose Gleichstrommotor eine Lebensdauer aufweist, die in etwa der Lebensdauer der übrigen Teile der Warnleuchte entspricht, ist ein möglicher Austausch von Teilen der Warnleuchte, wie er bei der Lösung gemäß Figur 1 möglich und gegeben ist, nicht unbedingt erforderlich. Bei der Warnleuchte gemäß Figur 3 ist zudem ein Rohranschlußteil (21) vorgesehen, das dann verwendet werden kann, wenn die erfindungsgemäße Warnleuchte nicht auf einer glatten, flächigen Unterlage, sondern auf einem Rohrende befestigt werden soll.

### Bezugszeichenliste:

### Warnleuchte für Fahrzeuge

- 1: Abdeckhaube
- 2: Reflektor
- 3: Leuchtensockel
- 4: (Gummi)Unterlegscheibe
- 5: Grundplatte
- 6: Leiterplatte
- 7: Gummipuffer
- 8: Ösen
- 9: Schrauben
- 10: Kragen von 5
- 11: Motorwicklung
- 12: Rotor
- 13: Permanentmagnete
- 14: Lager
- 15: Hülse
- 16: Sechskantschraube
- 17: Führungsteil, Isolierung
- 18: Scheibe
- 19: Schleifer
- 20: Flachstecker
- 21: Rohranschlußteil

## Patentansprüche

1. Warnleuchte für Fahrzeuge, mit einer lichtdurchlässigen Abdeckhaube (1), die auf einem Leuchtensockel (3) aufgesetzt ist, mit einer innerhalb der Abdeckhaube (1) angeordneten Glühlampe, mit einem innerhalb der Abdeckhaube (1) angeordneten, drehbaren Reflektor (2), mit einem innerhalb der Abdeckhaube (1) angeordneten Antrieb zum Drehen des Reflektors (2), der mit dem Leuchtensockel (3) drehfest verbunden ist, wobei der Antrieb einen kollektorlosen, getriebelosen Motor aufweist und der Stator die Motorwicklungen (11) aufweist, dadurch gekennzeichnet daß der Rotor (12) des Motors außerhalb vom Stator (11) angeordnet ist, daß die Motorwicklungen (11) auf einem Kragen (10) einer Grundplatte (5) angeordnet sind und daß der Kragen (10) einstückig mit der Grundplatte (5) ausgebildet ist.

2. Warnleuchte nach Anspruch 1, dadurch gekennzeichnet, daß der Stator (11) mit dem Leuchtensockel (3) drehfest verbunden ist.

3. Warnleuchte nach Anspruch 2, dadurch gekennzeichnet, daß der Stator (11) mit dem Leuchtensockel (3) schwingungsgedämpft, insbesondere mittels Gummipuffern (7), verbunden ist.

4. Warnleuchte nach Anspruch 2, dadurch gekennzeichnet, daß die Grundplatte (5) einstückig mit dem Leuchtensockel (3) ausgebildet und aus Kunststoff gespritzt ist.

5. Warnleuchte nach Anspruch 1, dadurch gekennzeichnet, daß die Grundplatte (5) eine Leiterplatte (6) mit den elektronischen Bauteilen zur elektronischen Kommutierung des Motors trägt.

6. Warnleuchte nach Anspruch 1, dadurch gekennzeichnet, daß der Rotor (12) Permanentmagnete (13) aufweist und daß der Reflektor (2) mit dem Rotor (12) drehfest verbunden ist.

7. Warnleuchte nach Anspruch 6, dadurch gekennzeichnet, daß die Glühlampe mit dem Rotor (12) drehfest verbunden ist.

8. Warnleuchte nach Anspruch 1, dadurch gekennzeichnet, daß der Rotor (12) Lager (14) aufweist, die auf einer drehfest mit der Grundplatte (5) verbundenen Hülse (15) drehbar angeordnet sind.

9. Warnleuchte nach Anspruch 8, dadurch gekennzeichnet, daß die Hülse (15) elektrisch leitfähig und einerseits mit der Glühlampe und andererseits mit einem elektrischen Anschluß (20) verbunden ist.

10. Warnleuchte nach Anspruch 7 und Anspruch 9, dadurch gekennzeichnet, daß innerhalb der Hülse (15) mittels eines Führungsteils (17) isoliert ein elektrischer Leiter, insbesondere eine Schraube (16) angeordnet ist, die einerseits mit der Glühlampe und andererseits mit einem weiteren elektrischen Anschluß (20) verbunden ist.

11. Warnleuchte nach Anspruch 9 oder Anspruch 10, dadurch gekennzeichnet, daß der Rotor (12) auf der Hülse (15) mittels einer Scheibe (18) axial fixiert ist und daß Schleifer (19) zur elektrischen Verbindung von Hülse (15) und Leiter mit der Glühlampe vorgesehen sind.

## Claims

1. Warning lamp for vehicles, comprising a light-permeable hood (1) which is seated on a lamp socket (3), with a light bulb arranged within the hood (1), with a rotary reflector (2) arranged within the hood (1), with a drive for rotating the reflector, which is arranged within the hood (1) and non-rotationally connected to the lamp socket (3), and that the drive comprises a motor without collector or gearing, and the stator holds the motor windings (11), **characterized in that** the rotor (12) of the motor is arranged outside the stator (11), that the motor windings (11) are arranged on a collar (10) of a base plate (5), and that the collar (10) is integrated with the base plate (5).

2. Warning lamp according to Claim 1, **characterized in that** the stator (11) is non-rotationally connected to the lamp socket (3).

3. Warning lamp according to Claim 2, **characterized in that** the stator (11) is connected to the lamp socket (3) in a vibration absorbing manner, in particular by means of rubber buffers (7).

4. Warning lamp according to Claim 2, **characterized in that** the base plate (5) is integrated with the lamp socket (3) and moulded of plastic material.

5. Warning lamp according to Claim 1, **characterized in that** the base plate (5) supports a conductor plate (6) with electronic components for electronic commutation of the motor.

6. Warning lamp according to Claim 1, **characterized in that** the rotor (12) comprises permanent magnets (13), and the reflector (2) is non-rotationally connected to the rotor (12).

7. Warning lamp according to Claim 6, **characterized in that** the light bulb is non-rotationally connected to the rotor (12).

8. Warning lamp according to Claim 1, **characterized in that** the rotor (12) has bearings (14) rotationally arranged on a sleeve (15) which is non-rotationally connected to the base plate (5).

9. Warning lamp according to Claim 8, **characterized in that** the sleeve (15) is electrically ducting and connected on the one side to the light bulb and on the other side to an electrical connector (20).

10. Warning lamp according to Claim 7 and Claim 9, **characterized in that** within the sleeve (15) and insulated by means of a guide element (17) is an electric conductor, in particular a screw (16), which is connected on the one side to the light bulb and on the other side to a further electrical connector (20).

11. Warning lamp according to Claim 9 or Claim 10, **characterized in that** the rotor (12) is axially fixed on the sleeve (15) by means of a disc (18), and that sliders (19) are provided for an electrical connection of the sleeve (15) and the conductor to the light bulb.

## Revendications

1. Feu avertisseur pour véhicules, comportant un capuchon (1) translucide qui est posé sur un socle de lampe (3), une lampe à incandescence agencée à l'intérieur du capuchon (1), un réflecteur (2) rotatif agencé à l'intérieur du capuchon (1), un entraînement en rotation du réflecteur (2), agencé à l'intérieur du capuchon (1), ledit réflecteur étant relié solidairement en rotation avec le socle de la lampe (3), l'entrâinement présentant un moteur électroréducteur sans collecteur, et le stator comportant les bobines (11) du moteur, caractérisé en ce que le rotor (12) du moteur est agencé en dehors du stator (11), en ce que les bobines (11) du moteur sont agencées sur une collerette (10) d'une plaque de base (5) et en ce que la collerette (10) est réalisée d'une seule pièce avec la plaque de base (5).

2. Feu avertisseur selon la revendication 1, caractérisé en ce que le stator (11) est relié solidairement en rotation au socle de la lampe (3).

3. Feu avertisseur selon la revendication 2, caractérisé en ce que le stator (11) est relié au socle de la lampe (3) de manière à amortir les vibrations, en particulier au moyen de tampons de caoutchouc (7).

4. Feu avertisseur selon la revendication 2, caractérisé en ce que la plaque de base (5) est réalisée d'une seule pièce avec le socle de la lampe (3), et en ce qu'elle est injectée en matière plastique.

5. Feu avertisseur selon la revendication 1, caractérisé en ce que la plaque de base (5) porte une carte imprimée (6) avec les composants électroniques destinés à la commutation électronique du moteur.

6. Feu avertisseur selon la revendication 1, caractérisé en ce que le rotor (12) présente des aimants permanents (13) et en ce que le réflecteur est relié solidairement en rotation avec le rotor (12).

7. Feu avertisseur selon la revendication 6, caractérisé en ce que la lampe à incandescence est reliée solidairement en rotation avec le rotor (12).

8. Feu avertisseur selon la revendication 1, caractérisé en ce que le rotor (12) présente des paliers (14) qui sont agencés en rotation sur une douille (15) reliée solidairement en rotation avec la plaque de base (5).

9. Feu avertisseur selon la revendication 8, caractérisé en ce que la douille (15) est conductrice, et en ce qu'elle est reliée d'une part à la lampe à incandescence et d'autre part à un branchement électrique (20).

10. Feu avertisseur selon les revendications 7 et 9, caractérisé en ce qu'un conducteur électrique, en particulier une vis, isolée au moyen d'un élément de guidage (17), est agencée à l'intérieur de la douille (15), ladite vis étant reliée d'une part à la lampe à incandescence et d'autre part à un autre branchement électrique (20).

11. Feu avertisseur selon l'une ou l'autre des revendications 9 et 10, caractérisé en ce que le rotor (12) est fixé axialement sur la douille (15) au moyen d'un disque (18) et en ce que des balais (19) sont prévus pour la liaison électrique de la douille (15) et du conducteur avec la lampe à incandescence.
